# EUROPEAN PATENT SPECIFICATION

(11) **EP 0 412 077 B1**
(45) Date of publication and mention of the grant of the patent: **08.03.1995**
(21) Application number: 88900084.0
(22) Date of filing: 10.12.1987
(51) Int. Cl.: G02B 21/00

(54) **APPARATUS FOR THE RELATIVE INCREASE OF DEPTH SHARPNESS AND IMPROVEMENT OF RESOLVING POWER OF MAGNIFYING SYSTEMS, PARTICULARLY MICROSCOPES**
VORRICHTUNG ZUR RELATIVEN ERHÖHUNG DER TIEFENSCHÄRFE UND VERBESSERUNG DES AUFLÖSUNGSVERMÖGENS BEI VERGRÖSSERNDEN SYSTEMEN, INSBESONDERE FÜR MIKROSKOPE
APPAREIL POUR L'AUGMENTATION RELATIVE DE LA NETTETE DE PROFONDEUR ET POUR L'AMELIORATION DU POUVOIR RESOLVANT DE SYSTEMES OPTIQUES GROSSISSANTS, PARTICULIEREMENT DE MICROSCOPES

(30) Priority: 10.12.1986 HU 515386
(43) Date of publication of application: 13.02.1991
(73) Proprietor: STUBER, Istvan, H-1123 Budapest (HU); NAGY, Géza, H-1195 Budapest (HU); PETRAK, Peter, 1126 Budapest (HU)
(72) Inventor: STUBER, Istvan, H-1123 Budapest (HU); NAGY, Géza, H-1195 Budapest (HU); PETRAK, Peter, 1126 Budapest (HU)
(74) Representative: Schick, Carl
(86) International application number: PCT/HU87/00055
(87) International publication number: WO 88/04438

(56) References cited:
- DE-A- 1 803 964
- DE-A- 2 360 197
- DE-A- 2 731 791
- DE-A- 3 200 038
- DE-B- 1 111 845
- H. Illig et al.: "ABC Glas", published 1983 by VEB Deutscher Verlag für Grundstoffindustrie (Leipzig), p 249
- O. Neumüller "Römpps Chemie-Lexikon", vol. 2, published 1981 by Frankh'sche Verlagshandlung (Stuttgart), p 1487

## Description

### Technical field

The invention relates to an apparatus for the relative increase of depth sharpness and improvement of resolving power of magnifying systems, particularly microscopes.

### Background art

In technical practice but also in other, so e. g. medical, biological fields increase of depth sharpness and improvement of resolving power of magnifying systems, in particular microscopes represent still a task to be solved. DE-B- 1 111 845 for example is concerned with avoiding entoptic and dioptric disturbances at high magnifications.

For the adjustment of the image plane or in case of imaging in a ratio of 1:1 at most frosted glass-sheets used to be applied. In these cases frosted glass-sheets are fixed, as an eventual displacement thereof does not result in a considerable improvement of image quality.

It has been found in course of our experiments that if small objects are imaged with a considerable magnifying, i. e. in case of microscopic systems such an effect already appears. With this type of magnifying - among others - small depth-sharpness represents the limit of detecting. We ascertained that by using the frosted glass-sheets and moving them in the image plane an image with a better depth sharpness and richer in details could be obtained, that means that both depth sharpness and grade of magnifying could be increased in this manner and as a consequence, applicability of the presently used microscopes can be increased.

### Disclosure of Invention

The aim of the invention is that the image having been produced by the objective of an optical or physical composite magnifying system should be richer in details and the largest depth sharpness could be achieved.

In accordance with the invention the task set has been achieved with the combination of the features of claim 1.

Movement of the sheet can take place along any regular or irregular path. Moving along a circular path seems to be the most expedient.

In the most simple case the sheet can be a frosted glass-sheet, however, solid particles having been dispersed in a liquid - i. e. suspensions -, or liquid particles dispersed in a liquid - i. e. emulsions -, or gas bubbles dispersed in a liquid - i. e. foams -, or liquid drops having been dispersed in a gas - i. e. aerosols, that means disperse systems, furtheron colloid solutions can be successfully used as sheet.

Furtheron, mat surface of transparent solid materials can also be used, having a different index of refraction than that of the medium in which it is placed /theoretically vacuum is also a "medium with a different index of refraction"/. As a sheet the mat surface of an opaque material, where primary and secondary optical systems are arranged on the same side of the sheet, on the side corresponding to the mat surface, fiber optics, gas bubble dispersed in a transparent solid material, solid grains, liquid drop or solid particles dispersed in a gas, e. g. smoke can also be taken into account.

These sheets are in movement, while this moving can take place - as already mentioned before - on any regular or irregular path. However, beside said movements taking place on regular or irregular paths or even simultaneously therewith, other movements are also possible, so e. g. a rotary motion around its own axis of rotation, an alternating motion with irregularly changing velocity along a straight running parallel with the optical axes of the apparatus enclosing an angle therewith, respectively.

Within the sheet the particles dispersed in the medium having an index of refraction different from that of the particles do not move or only to an inconsiderable extent in respect to the medium with the different index of refraction in certain cases, while in other cases a considerable material flow can be observed within the sheet, besides, in the sheets the particles dispersed in the medium having an index of refraction different from that of the medium are even capable to luminescence.

The independent particles taking part in building-up the sheet are able to produce luminescence, if their index of refraction does not differ from that of the medium in which they are dispersed.

In case if the apparatus according to the invention for producing the image of the object practically any illuminating system can be used, in which the wavelength is different from the wavelength of the visible light, or emitting an electromagnetic radiation with a wavelength corresponding to the wavelength of the visible light or even an illuminating system emitting electron radiation.

The application of any illuminating system of optional number, arrangement and actuated in any optional combination is permitted for illuminating the object at an optional angle, the more, these can be operated in an optional combination and simultaneously.

A preferred embodiment of the invention is provided with a stroboscopic illuminating system. In the apparatus according to the invention possibilities of illuminating the object to be tested can be varied within wide limits: so e. g. illuminating can take place through a layer consisting of particles dispersed in a medium having an index of refraction different from that of any sheet, while this sheet is arranged in the travel of the beam in the tract between the condenser and the object and the layer may move on a regular or irregular path.

In case of using a sheet made of an opaque material illuminating is realized by means of the beam reflected from the mat surface; in this case the mat surface - which is either stationary or moving - is arranged in the travel of the beam between tne condenser and the object, while the illuminating system is arranged on the same side of the mat surface as the object.

With another preferred embodiment of the invention illuminating is realized - by using any of the aforementioned sheets - through the layer consisting of particles having been dispersed in a medium with different index of refraction, while the sheet is to be found in the path of the beam, in the tract between the source of light and radiation, respectively, and the condenser, and the layer can be stationary or moving.

In case if a frosted glass-sheet is used as a sheet, illuminating is realized through said frosted glass-sheet and in this case the frosted glass-sheet is arranged in the travel of the beam, between the source of light and radiation, respectively, and the condenser and moves there on a regular or irregular, expediently on a regular circular path, and simultaneously with said motion it may perform a rotary motion around its own axis of rotation with an optional velocity.

With another preferred embodiment of the invention illuminating is realized with a beam having been reflected from the mat surface of a sheet of opaque material, wherein the mat surface is lying in the travel of beam of the apparatus, in the section between the source of light and radiation, respectively, and the condenser and it is either stationary or it moves.

With the preferred embodiments of the invention the bundle of rays is arranged in a closed casing surrounding the bundle of rays partially or totally. Into the travel of the beam of the apparatus - according to the invention - in any section thereof, any optical elements in any optional number, combination or geometric arrangement can be inserted, so a mirror, lens, prism,plane-parallel plate, fibre optics, filter, polarization, phase and interference contrast means, etc.

With a further preferred embodiment in any optional section of the travel of the beam of the apparatus stroboscopes are arranged in any optional number and arrangement.

The apparatus according to the invention for producing the spatial image of the object the optical system has two primary magnifiers producing an image of the object each on the sheet at different angles, furtheron two secondary magnifiers, each projecting said images isolated into the two eyes of the viewer.

With a still further preferred embodiment of the apparatus according to the invention the built-in objectives - primary, secondary, etc. - are performing an optional alternating movement, each separately, unindirectionally with the optical axis and also in compliance therewith, with regular or irregular acceleration and velocity, respectively.

According to a further preferred embodiment of the invention in the travel of the beam, along the optical axis more than two magnifiers and are arranged, wherein the image having been produced by the secondary magnifier is projected to a further sheet and enlarged by a third - a tertiary - magnifier, that is said process is repeated on further sheets and when using a plurality of sheets and if at least one sheet is put into motion, the other sheets are either stationary or moving, in an optional combination.

With all the preferred embodiments of the apparatus according to the invention every single optical and mechanical structural element taking part in building-up the apparatus are arranged so as to enabling a movement in relation to each other along any optional regular or irregular path with any optional velocity and optional combination, while the object tested is arranged so that it could be moved along an optional regular or irregular path with an optional velocity.

In any section of the path of the beam of the preferred embodiments of the apparatus according to the invention a photo-camera, video-camera or any other layer sensitive to radiation, transducer is arranged, the said apparatuses are displacable along any optional path.

In accordance with a further preferred embodiment of the invention the sheet is formed by the mat surface of two transparent solid materials, in this case mat surfaces of the two transparent solid materials are arranged on one another and facing each other, they are stationary or move in relation to each other on any regular or irregular path, and between the two surfaces - not preventing the motion of the image forming layer - a material is to be found with an index of refraction being different from that of the particles of the mat surface, this material can be either a liquid, a gas, vacuum, or any solid or other type of material.

As already mentioned before, a variety of sheets can be used, however, for the sake of simplicity, furtheron we refer to a frosted glass-sheet only.

Granular surface of the frosted glass-sheet is moving in the image-plane of the first - primary - magnifying stage of the composite magnifying system, while the beam coming from the object are projected by a simple or composite magnifier - furtheron primary magnifier - onto the granular surface of the frosted glass-sheet, thus producing the image in the plane of the particles, i. e. the plane of the image of the primary magnifier coincides with the granular surface of the frosted glass-sheet.

This image is enlarged by another simple or composite magnifier - furtheron: secondary magnifier - that means, that the object-plane of the secondary magnifier coincides with the granular layer of the frosted glass-sheet. As already mentioned before, in course of image forming the frosted glass-sheet is moving along some regular or irregular path. Up to now no example has been known for allowing to move the frosted glass-sheet in the image plane for obtaining an image richer in details and increasing depth sharpness.

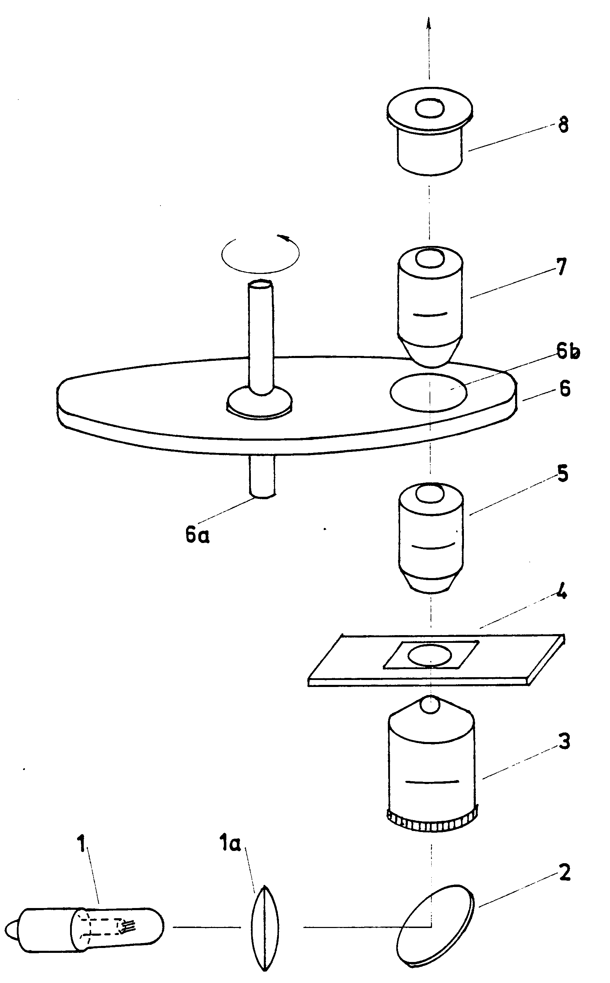

### Brief Description of the Drawing

The invention will now be described by means of a preferred embodiment serving as example, by the aid of the accompanying drawing showing the side view of the schematical arrangement of the apparatus according to the invention.

### Best Mode of Carrying out the Invention

As it is to be seen in the figure, the illuminating system consists of a lamp 1, a collecting lens la and a mirror 2. In the path of the beam projected by the mirror 2 - in the figure vertically upwards - /in the so-called optical axis/ elements are arranged one above another: a condenser 3, an object 4 / generally a microscopic section/, a primary magnifier 5, a rotatable frosted glass-sheet 6, a secondary objective 7 and a secondary ocular 8. The frosted glass-sheet 6 can be rotated around the axis of rotation 6a, said axis of rotation 6a is arranged excentrically in relation to the optical axis. In the point of intersection of the frosted glass-sheet 6 and the optical axis the image 6b of the object 4 is to be found.

The bundle of rays having been projected by the illuminating system, by the aid of a condenser 3 through the object 4 is imaged by the primary magnifier onto the upper blind surface of the frosted glass-sheet 6.

The image 6b thus obtained is enlarged by the composite magnifier consisting of the secondary objective 7 and the secondary ocular 8. The microscopic photo-apparatus can be inserted onto the place of the secondary ocular 8.

The advantages of the invention can be summarized, as follows:

The composite microscope system, into which a frosted glass-sheet was built-in, as described previously, in accordance with the invention is formed - as a matter of fact - by two microscopes placed one behind the other. The object points lying within the depth sharpness of the primary objective of the first microscope are imaged in one plane on the surface of the frosted glass-sheet, while the image thus obtained is enlarged by the secondary magnifier. As a consequence, the image having been produced by the secondary magnifier keeps the depth sharpness of the primary magnifier. As a consequence of the movement of the frosted glass-sheet the quality of the image appearing on the surface thereof will be improved, accordingly it can be further enlarged by the secondary magnifier. Thus in the whole system proportion of magnifying and depth sharpness will be shifted so that a given magnifying is accompanied by a larger depth sharpness, that means that depth sharpness of the optical system relatively increases. In such a manner it becomes possible to detect microscopic configurations lying in deeper and thicker layers, than up to now, simultaneously possibility of examination of microscopic objects will also be enlarged. At the same time resolving power of the magnifying system will also be improved.

In accordance with the invention an apparatus is provided suitable to create the spatial image of an object. In this case simultaneously two optical systems are applied on the surface of the sheet by means of two primary magnifiers two images are produced, each at a different angle, thereafter, viewing these images with a secondary magnifier each, the image produced by the secondary magnifier is projected isolated into the two eyes of the viewer.

It goes without saying that the invention is not restricted to the embodiment described above by way of example only different other embodiments are also possible without leaving the scope of protection. So e. g. for producing the image of the object any other electromagnetic radiation with a wavelength different from the wavelength of visible light can be applied. Primary and secondary magnifiers can be arranged on the same or opposite sides of the plane of the image forming layer. In the first case the travel of beam is incident in respect to the sheet while transmitted in the second case. In case of incident beam travel mat surface of opaque materials can also form the sheet.

Theoretically, it is possible to arrange more than two magnifiers as well as sheets in the travel of beam along the optical axis. In such a case the image having been produced by the secondary magnifier is projected onto a further sheet, which again is further enlarged by a third - tertiary - magnifier. Based on this principle several magnifying stages can be realized.

## Claims

1. A microscope comprising two optical systems, the optical axes of the systems crossing each other under an angle, each optical system comprising the following elements mentioned in the order they are positioned in the beam path of the microscope: means for defining an object plane, an objective (5) constructed and positioned to form, of an object (4) positioned in the object plane, a magnified image in an image plane, a sheet (6) positioned in said image plane, the sheet (6) comprising particles dispersed in a medium, the index of refraction of the particles being different than the index of refraction of the medium, said sheet (6) having means (6a) to move the sheet in said image plane, a second objective (7) positioned to form a magnified image of the magnified image formed in said image plane, and an ocular (8).

2. Microscope according to claim 1, wherein in a further image plane of said second objectives (8) a second sheet comprising particles dispersed in a medium is arranged, the index of refraction of the particles being different from the index of refraction of the medium, and wherein a further objective in each optical system is positioned to form two magnified images of the magnified images on said second sheet.

3. Microscope according to claim 2, wherein said second sheet is movable in its plane.

4. Microscope according to one of claims 1- 3, further comprising an illuminating system (1-3) arranged for illuminating the object (4) in the object plane by electromagnetic radiation and/or an electron ray.

5. Microscope according to claim 4, wherein the illuminating system comprises a stroboscope.

6. Microscope according to one of claims 1-5, wherein the sheet (6) is formed of an opaque material and the first and second objectives are arranged on the same side of the sheet.

7. Microscope according to one of claims 1-6, wherein the sheet (6) is formed by solid and/or liquid particles dispersed in a liquid or by gas bubbles dispersed in a liquid or in a colloidal solution or in a solid material and/or liquid drops and/or solid particles dispersed in a solid material, the particles dispersed in the medium being essentially stationary with respect to one another and to the medium.

8. Microscope according to one of claims 1-6, wherein the sheet (6) is formed by solid and/or liquid particles dispersed in a liquid or by gas bubbles dispersed in a liquid or by liquid drops and/or solid particles dispersed in gas or in a colloidal solution, and wherein said particles dispersed in said medium are movable with respect to one another and to the medium.

9. Microscope according to one of claims 1-8, wherein a stroboscope is arranged in the optical paths of the light from the object.

## Patentansprüche

1. Mikroskop, umfassend zwei optische Systeme, deren optische Achsen sich unter einem Winkel kreuzen, wobei jedes optische System die folgenden Elemente umfasst, aufgeführt in der Reihenfolge, in welcher sie im Strahlengang des Mikroskops positioniert sind: Mittel, um eine Objektebene zu definieren, ein Objektiv (5), das derart ausgebildet und positioniert ist, um von einem in der Objektebene positionierten Objekt (4) ein vergrössertes Bild in einer Bildebene zu bilden, eine in der Bildebene angeordnete Scheibe (6), die in einem Medium verteilte Partikel enthält, wobei der Brechungsindex der Partikel vom Brechungsindex des Mediums verschieden ist, wobei die Schreibe (6) Mittel (6a) zum Bewegen der Scheibe in der Bildebene hat, ein zweites Objektiv (7), das zum Bilden eines vergrösserten Bildes des in der Bildebene vergrösserten Bildes positioniert ist, und ein Okular (8).

2. Mikroskop nach Anspruch 1, wobei in einer weiteren Bildebene der zweiten Objektive (8) eine zweite Scheibe enthaltend in einem Medium verteilte Partikel angeordnet ist, wobei der Brechungsindex der Partikel vom Brechungsindex des Mediums verschieden ist, und wobei ein weiteres Objektiv in jedem optischen System positioniert ist, um zwei vergrösserte Bilder der vergrösserten Bilder auf der zweiten Scheibe zu bilden.

3. Mikroskop nach Anspruch 2, wobei die zweite Scheibe in ihrer Ebene beweglich ist.

4. Mikroskop nach einem der Ansprüche 1 bis 3, umfassend zusätzlich ein Beleuchtungssystem (1-3) zum Beleuchten des Objektes (4) in der Objektebene mit elektromagnetischer Strahlung und/oder einem Elektronenstrahl.

5. Mikroskop nach Anspruch 4, wobei das Beleuchtungssystem ein Stroboskop umfasst.

6. Mikroskop nach einem der Ansprüche 1 bis 5, wobei die Scheibe aus einem opaken Material besteht und die ersten und zweiten Objektive auf derselben Seite der Scheibe angeordnet sind.

7. Mikroskop nach einem der Ansprüche 1 bis 6, wobei die Scheibe aus festen und/oder flüssigen Partikeln besteht, die in einer Flüssigkeit verteilt sind oder aus Gasblasen, die in einer Flüssigkeit oder in einer gelartigen Lösung oder in einem festen Material und/oder aus festen Partikeln in einem festen Material, wobei die im Medium verteilten Partikel im wesentlichen stationär zueinander und zum Medium sind.

8. Mikroskop nach einem der Ansprüche 1 bis 6, wobei die Scheibe durch feste oder flüssige, in einer Flüssigkeit verteilte Partikel gebildet ist oder durch in einer Flüssigkeit verteilte Gasblasen oder durch Flüssigkeitstropfen und/oder feste Partikel, die in einem Gas oder in einer gelartigen Lösung verteilt sind, und wobei die im Medium verteilten Partikel gegeneinander und gegenüber dem Medium beweglich sind.

9. Mikroskop nach einem der Ansprüche 1 bis 8, wobei ein Stroboskop im Strahlengang des Lichtes vom Objekt angeordnet ist.

## Revendications

1. Microscope comprenant deux systèmes optiques, les axes optiques des systèmes se croisant suivant un certain angle, chaque système optique comprenant les éléments suivants cités dans l'ordre dans lequel ils sont placés sur le trajet du faisceau du microscope : des moyens de définition d'un plan objet, un objectif (5) construit et positionné pour former, dans un plan image, une image grossie d'un objet (4) placé dans le plan objet, une feuille (6) placée dans ledit plan image, la feuille (6) comportant des particules dispersées dans une matière porteuse, l'indice de réfraction des particules étant différent de l'indice de réfraction de la matière porteuse, ladite feuille (6) ayant des moyens (6a) pour déplacer la feuille dans ledit plan image, un deuxième objectif (7) positionné de manière à former une image grossie de l'image grossie formée dans ledit plan image, et un oculaire (8).

2. Microscope suivant la revendication 1, dans lequel, dans un autre plan image desdits deuxièmes objectifs (7), est placée une deuxième feuille comportant des particules dispersées dans une matière porteuse, l'indice de réfraction des particules étant différent de l'indice de réfraction de la matière porteuse, et dans lequel un autre objectif dans chaque système optique est positionné de manière à former deux images grossies des images grossies sur ladite deuxième feuille.

3. Microscope suivant la revendication 2, dans lequel ladite deuxième feuille est déplaçable dans son plan.

4. Microscope suivant une des revendications 1 à 3, comprenant en outre un système d'éclairage (1-3) agencé pour éclairer l'objet (4) dans le plan objet, par un rayonnement électromagnétique et/ou un rayonnement d'électrons.

5. Microscope suivant la revendication 4, dans lequel le système d'éclairage comprend un stroboscope.

6. Microscope suivant une des revendications 1 à 5, dans lequel la feuille (6) est en une matière opaque et les premiers et deuxièmes objectifs sont disposés du mème côté de la feuille.

7. Microscope suivant une des revendications 1 à 6, dans lequel la feuille (6) est formée par des particules solides et/ou liquides dispersées dans un liquide, ou par des bulles de gaz dispersées dans un liquide ou dans une solution colloïdale ou dans une matière solide, et/ou des gouttes liquides et/ou des particules solides dispersées dans une matière solide, les particules dispersées dans la matière ou le milieu porteur étant sensiblement immobiles les unes par rapport aux autres et par rapport au milieu porteur.

8. Microscope suivant une des revendications 1 à 6, dans lequel la feuille (6) est constituée par des particules solides et/ou liquides dispersées dans un liquide ou par des bulles de gaz dispersées dans un liquide ou par des gouttes liquides et/ou des particules solides dispersées dans un gaz ou dans une solution colloïdale, et dans lequel lesdites particules dispersées dans le dit milieu porteur sont mobiles les unes par rapport aux autres et par rapport au milieu porteur.

9. Microscope suivant une des revendications 1 à 8, dans lequel un stroboscope est disposé dans les chemins optiques de la lumière venant de l'objet.
